# EUROPEAN PATENT APPLICATION

(11) **EP 3 068 132 A1**
(43) Date of publication of application: **14.09.2016**
(21) Application number: 16158984.1
(22) Date of filing: 07.03.2016
(51) Int. Cl.: H04N 7/15

(54) **INFORMATION PROCESSING APPARATUS, INFORMATION PROCESSING SYSTEM, AND INFORMATION PROCESSING METHOD**

(30) Priority: 09.03.2015 JP 2015045671
(71) Applicant: Ricoh Company, Ltd., Tokyo 143-8555 (JP)
(72) Inventor: HINOHARA, Hiroshi, Tokyo, 143-8555 (JP); ASAI, Takahiro, Tokyo, 143-8555 (JP); UMEHARA, Naoki, Tokyo, 143-8555 (JP)
(74) Representative: Schwabe - Sandmair - Marx

(57) **Abstract**

An information processing apparatus for connection to a call control device and a relay device via a communication network is provided, The information processing apparatus includes a log-in requesting unit that sends a log-in request to the relay device; a service setting requesting unit that sends a request for setting service of communication to the relay device if a report indicating that a login is allowed is received, the report being transmitted by the relay device in response to the log-in request; and a service start requesting unit that sends a request for starting the service, via the call control device, between the information processing apparatus and an information processing device that serves as a communication partner. The request includes service identification information for identifying the service and log-in information for using the service transmitted by the relay device in response to the request for setting service.

## Description

### BACKGROUND OF THE INVENTION

### 1. Field of the Invention

The present invention relates to an information processing system.

### 2. Description of the Related Art

Video conference systems for holding a teleconference with a remote location via a communication network such as the Internet are in common use. According to this video conference system, in a conference room where one of parties such as attendees of the teleconference is present, an information processing device such as a terminal is used to shoot images and collect voice sound of the party of the conference in the conference room. Data on the images and the voice sound are converted into digital data and transmitted to an information processing device such as a terminal of another party. The transmitted images in the conference room are displayed on a display screen and the voice sound is output from a loudspeaker in a conference room of the other party.

As to video conference systems, there is a technique of selecting a relay device to be used for holding a conference depending on a network environment, an IP address of the relay device, and a delay between the relay device and a terminal (see Patent Document 1, for example).

In video conference systems of related art, there is a dependent relation between a call control device used to start a conference and a relay device to communicate pictures and voice sound during the conference. Accordingly, if the relay device is to be replaced or added, the call control device is to be newly added.

### Related Art Documents

[Patent Document 1] Japanese Laid-Open Patent Application No. 2012-075073

### SUMMARY OF THE INVENTION

It is a general object of at least one embodiment of the present invention to facilitate replacement of a relay device or addition of the relay device in a communication system, the communication system including a call control device that performs a process of call control between information processing devices and the relay device that relays information between the information processing devices.

In an embodiment, an information processing apparatus for connection to a call control device and a relay device via a communication network is provided. The information processing apparatus includes a log-in requesting unit that sends a log-in request to the relay device; a service setting requesting unit that sends a request for setting service of communication to the relay device if a report indicating that a login is allowed is received, the report being transmitted by the relay device in response to the log-in request; and a service start requesting unit that sends a request for starting the service, via the call control device, between the information processing apparatus and an information processing device that serves as a communication partner, the request for starting the service including service identification information for identifying the service and log-in information for using the service, the service identifcation information and the log-in information being transmitted by the relay device in response to the request for setting service sent by the service setting requesting unit.

### BRIEF DESCRIPTION OF THE DRAWINGS

Other objects and further features of embodiments will become apparent from the following detailed description when read in conjunction with the accompanying drawings, in which:
Fig. 1 is a schematic diagram of a transmission system according to a first embodiment of the present invention;
Fig. 2 is a conceptual diagram illustrating transmission and reception of image data, voice data, and various types of management information in a transmission system;
Fig. 3A is a conceptual diagram illustrating picture quality of image data;
Fig. 3B is a conceptual diagram illustrating picture quality of image data;
Fig. 3C is a conceptual diagram illustrating picture quality of image data;
Fig. 4 is a configuration diagram of hardware of a transmission terminal according to the embodiment;
Fig. 5 is a configuration diagram of hardware of a relay device, a transmission management system, a program providing system, or a maintenance system according to the embodiment;
Fig. 6 is a functional block diagram of each transmission terminal, a relay device, and a transmission management system that constitute a transmission system according to the embodiment;
Fig. 7 is a conceptual diagram showing a table for determining permission of participation;
Fig. 8 is a conceptual diagram showing a table for managing relay devices;
Fig. 9 is a conceptual diagram showing a table for managing terminal authentication;
Fig. 10 is a conceptual diagram showing a table for managing terminals;
Fig. 11 is a conceptual diagram showing a table for managing a destination list;
Fig. 12 is a sequence chart showing an example (1) of an operation of a communication system;
Fig. 13 is a sequence chart showing an example (2) of an operation of a communication system;
Fig. 14 is a sequence chart showing an example (3) of an operation of a communication system;
Fig. 15 is a flowchart showing an example of an operation of a transmission management system;
Fig. 16 is a sequence chart showing an example (4) of an operation of a communication system;
Fig. 17 is a diagram illustrating a display of a destination list; and
Fig. 18 is a sequence chart showing an example (5) of an operation of a communication system.

### DESCRIPTION OF THE PREFERRED EMBODIMENTS

In the following, embodiments of the present invention will be described based on examples below with reference to the drawings. The examples described below are used only for illustrative purposes and embodiments to which the present invention is applied are not limited to the following examples. In all the drawings for describing the examples, the same reference numerals are used for units having the same function to avoid a repetition of the same description.

### (First embodiment)

### <<Overall configuration of embodiment>>

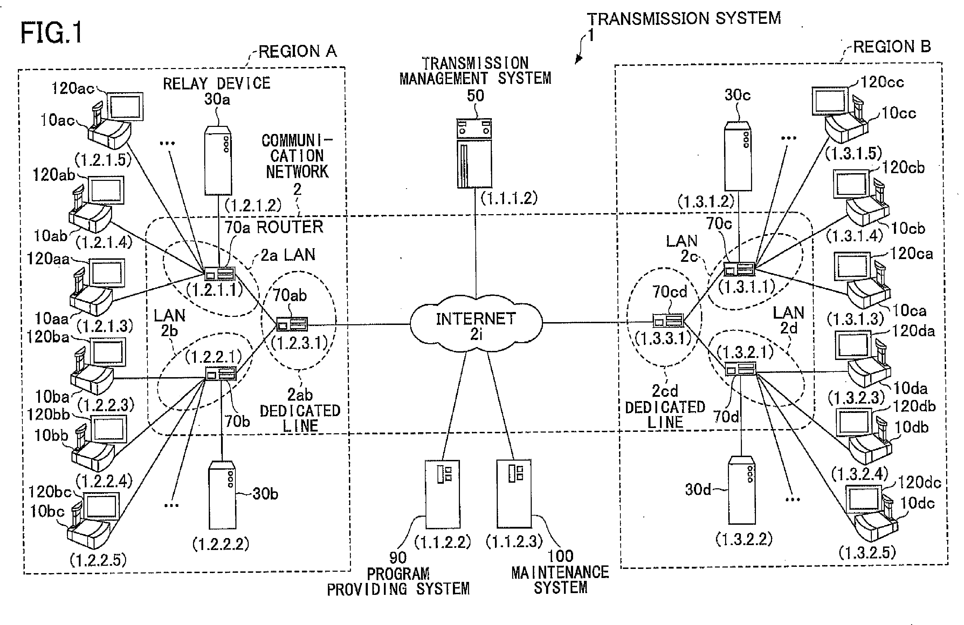

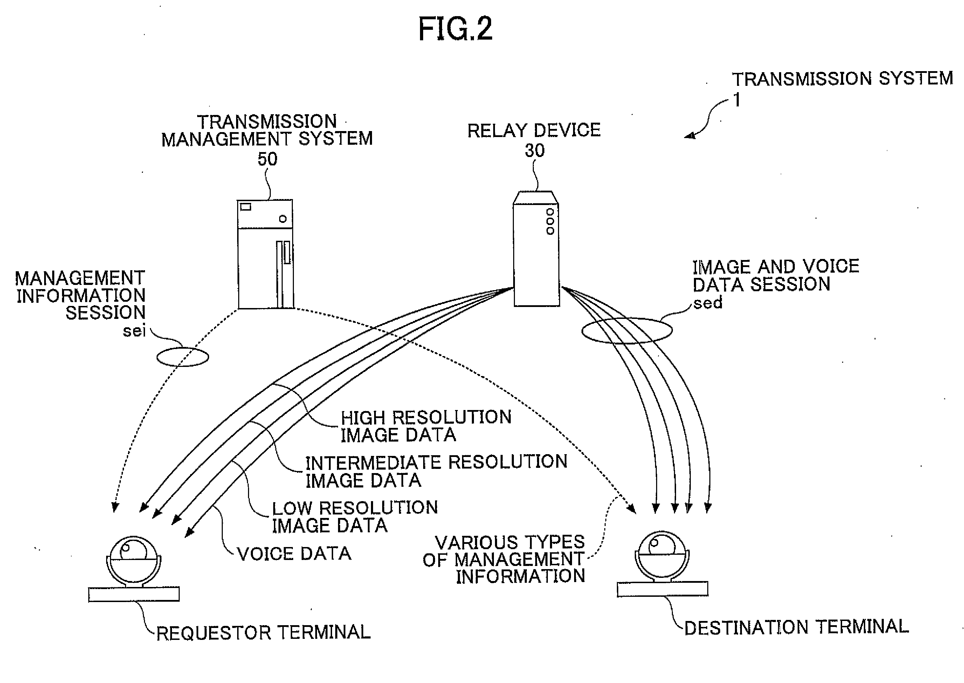

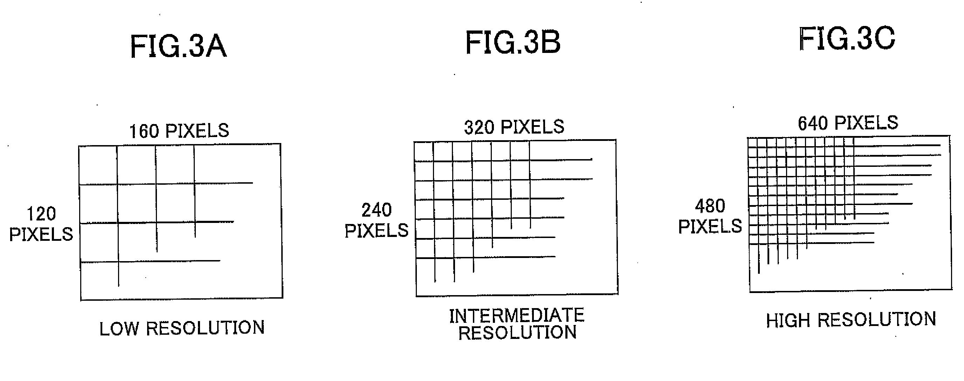

Fig. 1 is a schematic diagram of a transmission system 1 according to the first embodiment of the present invention. Fig. 2 is a conceptual diagram illustrating transmission and reception of image data, voice data, and various types of management information in the transmission system 1. Figs. 3A to 3C are conceptual diagrams illustrating picture quality of image data.

Further, the transmission system 1 includes a data providing system that transmits content data from one transmission terminal to another transmission terminal in a unidirectional manner via a transmission management system and a communication system that transfers information, feelings, and the like among a plurality of transmission terminals interactively via a transmission management system. This communication system is for interactively transferring information, feelings, and the like among a plurality of communication terminals (corresponding to "transmission terminals") via a communication management system (corresponding to "transmission management system"). Examples of the communication system include a video conference system and a video phone system.

In the present embodiment, the transmission system, the transmission management system, and the transmission terminal are described based on the assumption that the video conference system is an example of the communication system, a video conference management system is an example of the communication management system, and a video conference terminal is an example of the communication terminal. In other words, the transmission terminal and the transmission management system according to the present invention may be applied not only to the video conference system but also to the communication system or to the transmission system.

First, the transmission system 1 shown in Fig. 1 is configured with a plurality of transmission terminals (10aa, 10ab,...), display screens (120aa, 120ab,...) for corresponding transmission terminals (10aa, 10ab,...), a plurality of relay devices (30a, 30b, 30c, 30d), a transmission management system 50, a program providing system 90, and a maintenance system 100.

In the following, the "transmission terminal" may also be simply described as a "terminal" and the "transmission management system" may also be simply described as a "management system." Further, a given terminal among the terminals (10aa, 10ab,...) may also be simply described as a "terminal 10," a given display screen among the display screens (120aa, 120ab,...) may also be described as a "display screen 120," and a given relay device among the relay devices (30a, 30b, 30c, 30d) may also be described as a "relay device 30." Further, a terminal that sends a request for starting a video conference as a requestor may also be described as a "requestor terminal" and a terminal (communication partner) to which the request is sent as a destination (relay destination) may also be described as a "destination terminal,"

The plurality of terminals 10 perform transmission by sending and receiving image data and voice data as an example of content data.

Further, as shown in Fig. 2, in the transmission system 1, a management information session sei for transmitting and receiving various types of management information is established between the requestor terminal and the destination terminal via the transmission management system 50. Further, four sessions for transmitting and receiving four types of data including high resolution image data, intermediate resolution image data, low resolution image data, and voice data are established between the requestor terminal and the destination terminal via the relay device 30. In this case, these four sessions are collectively shown as an image and voice data session sed.

In the following, resolution of an image of image data handled in the present embodiment is described. As shown in Fig. 3A, a low resolution image has 160 pixels in a horizontal direction and 120 pixels in a vertical direction as a base image. As shown in Fig. 3B, an intermediate resolution image has 320 pixels in the horizontal direction and 240 pixels in the vertical direction. As shown in Fig. 3C, a high resolution image has 640 pixels in the horizontal direction and 480 pixels in the vertical direction. If image data is transmitted via a narrowband path, image data with low picture quality is relayed, the image data with low picture quality containing only low resolution image data as the base image. If the band is relatively wide, image data with intermediate picture quality is relayed, the image data with intermediate picture quality containing the low resolution image data as the base image and intermediate resolution image data. Further, if the band is very wide, image data with high picture quality is relayed, the image data with high picture quality containing the low resolution image data as the base image, the intermediate resolution image data, and high resolution image data.

The relay device 30 as shown in Fig. 1 relays content data among a plurality of terminals 10. The management system 50 manages log-in authentication from the terminal 10, a call status of the terminal 10, a destination list, a communication status of the relay device 30, and the like in an integrated manner. In addition, an image of image data may be a movie or a still image or may be both the movie and the still image.

A plurality of routers (70a, 70b, 70c, 70d, 70ab, 70cd) select an optimum path for image data and voice data. In the following, a given router among the routers (70a, 70b, 70c, 70d, 70ab, 70cd) is described as a "router 70."

The program providing system 90 includes a Hard Disk (HD) 204 described below in which a terminal program for implementing various functions for the terminal 10 (or causing the terminal 10 to function as various units) is stored. The program providing system 90 can transmit the terminal program to the terminal 10. Further, in the HD 204 of the program providing system 90, a relay device program for implementing various functions for the relay device 30 (or causing the relay device 30 to function as various units) is also stored. The program providing system 90 can transmit the relay device program to the relay device 30. Further, in the HD 204 of the program providing system 90, a transmission management program for implementing various functions for the management system 50 (or causing the management system 50 to function as various units) is also stored. The program providing system 90 can transmit the transmission management program to the management system 50.

The maintenance system 100 includes a computer for supporting, managing, or maintaining at least one of the terminal 10, the relay device 30, the management system 50, and the program providing system 90, For example, if the maintenance system 100 is disposed within the country and the terminal 10, the relay device 30, the management system 50, or the program providing system 90 is disposed outside the country, the maintenance system 100 remotely performs maintenance such as support, management, or the like on at least one of the terminal 10, the relay device 30, the management system 50, and the program providing system 90 via a communication network 2. Further, the maintenance system 100 performs maintenance such as management of a model number, a serial number, a customer's address, maintenance and inspection, or failure history on at least one of the terminal 10, the relay device 30, the management system 50, and the program providing system 90 without the communication network 2.

The terminals (10aa, 10ab, 10ac,...), the relay device 30a, and the router 70a are communicatively connected via a LAN 2a. The terminals (10ba, 10bb, 10bc,...), the relay device 30b, and the router 70b are communicatively connected via a LAN 2b. The LAN 2a and the LAN 2b are communicatively connected via a dedicated line 2ab in which the router 70ab is included and the LAN 2a and the LAN 2b are constructed within a predetermined region A. For example, the region A is Japan and the LAN 2a is constructed within an office in Tokyo, while the LAN 2b is constructed within an office in Osaka.

Terminals (10ca, 10cb, 10cc,...), the relay device 30c, and the router 70c are communicatively connected via a LAN 2c. Terminals (10da, 10db, 10dc,...), the relay device 30d, and the router 70d are communicatively connected via a LAN 2d. The LAN 2c and the LAN 2d are communicatively connected via a dedicated line 2cd in which the router 70cd is included and the LAN 2c and the LAN 2d are constructed within a predetermined region B. For example, the region B is the United States of America and the LAN 2c is constructed within an office in New York, while the LAN 2d is constructed within an office in Washington D.C. The region A and the region B are communicatively connected via the Internet 2i from the routers (70ab, 70cd).

Further, the management system 50 and the program providing system 90 are communicatively connected to the terminal 10 and the relay device 30 via the Internet 2i. The management system 50 and the program providing system 90 may be disposed in the region A or the region B or may be disposed in another region.

In the present embodiment, the LAN 2a, the LAN 2b, the dedicated line 2ab, the Internet 2i, the dedicated line 2cd, the LAN 2c, and the LAN 2d construct the communication network 2. The communication network 2 may include a part where wireless communication such as Wireless Fidelity (WiFi) or Bluetooth (registered trademark) is performed in addition to wired communication.

In Fig. 1, a set of four numbers shown beneath each terminal 10, each relay device 30, the management system 50, each router 70, and the program providing system 90 indicates an IP address in general IPv4 in a simplified manner. For example, the IP address of the terminal 10aa is "1.2.1.3." While IPv6 may be used instead of IPv4, IPv4 is used in order to simplify descriptions.

Each terminal 10 may be used not only for a call between offices or a call between different rooms in the same office but also for a call in the same room or a call between an outdoor place and an indoor place or between outdoor places. If each terminal 10 is used outdoors, wireless communication is performed in a mobile phone communication network or the like.

### «Hardware configuration of embodiment»

In the following, a hardware configuration of the present embodiment is described.

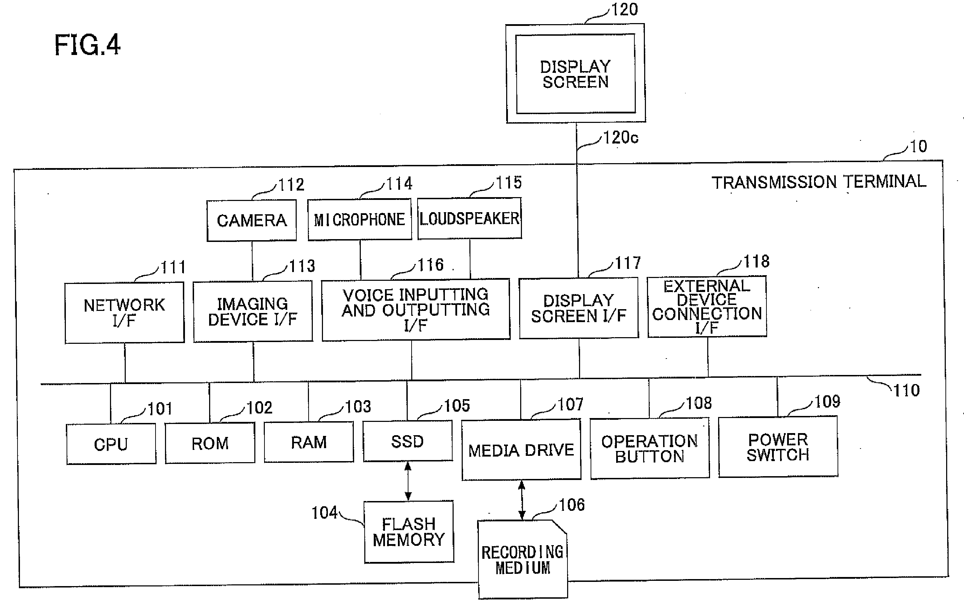

Fig. 4 is a configuration diagram of hardware of the terminal 10 according to the present embodiment. As shown in Fig. 4, the terminal 10 according to the present embodiment includes a Central Processing Unit (CPU) 101 that controls the whole operation of the terminal 10, a Read Only Memory (ROM) 102 that stores a program such as an Initial Program Loader (IPL) used to drive the CPU 101, a Random Access Memory (RAM) 103 used as a work area for the CPU 101, a flash memory 104 that stores various types of data such as a terminal program, image data, and voice data, a Solid State Drive (SSD) 105 that controls reading or writing of various types of data from or into the flash memory 104 in accordance with control of the CPU 101, a media drive 107 that controls reading or writing (storing) of data from a recording medium 106 such as a flash memory, an operation button 108 to be operated to select a destination of the terminal 10, for example, a power switch 109 to switch the terminal 10 ON/OFF, and a network interface (I/F) 111 that uses the communication network 2 to transmit data.

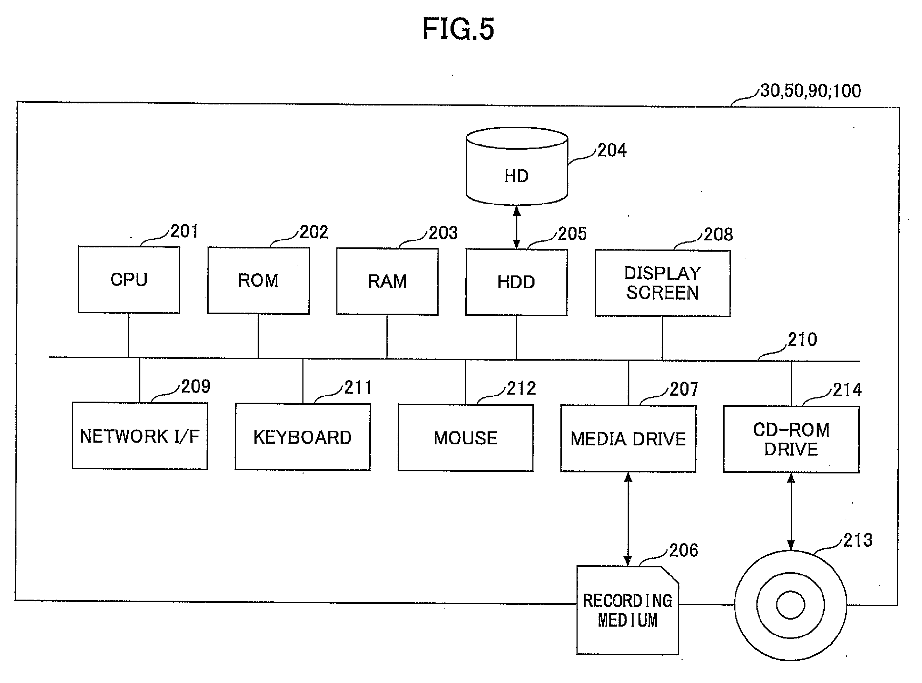

Further, the terminal 10 includes a built-in camera 112 that captures an image of an object in accordance with control of the CPU 101 to obtain image data, an imaging device I/F 113 that controls driving of the built-in camera 112, a built-in microphone 114 that inputs voice sound, a built-in loudspeaker 115 that outputs voice sound, a voice inputting and outputting I/F 116 that processes input and output of a voice signal between the microphone 114 and the loudspeaker 115 in accordance with control of the CPU 101, a display screen I/F 117 that transfers image data to the external display screen 120 in accordance with control of the CPU 101, an external device connection I/F 118 that connects various external devices, and a bus line 110 such as an address bus or a data bus that electronically connects the above constituent elements as shown in Fig. 5.

The display screen 120 is a display unit configured with liquid crystal or organic EL that displays an image of an object or icons for operation. Further, the display screen 120 is connected to the display screen I/F 117 via a cable 120c. This cable 120c may be a cable for analog RGB (VGA) signals, a cable for component videos, or a cable for High-Definition Multimedia Interface (HDMI) (registered trademark) or Digital Video Interactive (DVI) signals.

The camera 112 includes a solid-state image sensing device that converts light into an electric charge to obtain an electronized image (picture) of an object. A Complementary Metal Oxide Semiconductor (CMOS) or a Charge Coupled Device (CCD) is used for the solid-state image sensing device.

To the external device connection I/F 118, external devices such as an external camera, an external microphone, and an external loudspeaker can be connected using a Universal Serial Bus (USB) cable or the like. When the external camera is connected, the external camera is preferentially driven over the built-in camera 112 in accordance with control of the CPU 101. In the same manner, if the external microphone is connected or the external loudspeaker is connected, the external microphone or the external loudspeaker is preferentially driven over the built-in microphone 114 or the built-in loudspeaker 115 in accordance with control of the CPU 101.

In addition, the recording medium 106 is removable from the terminal 10. Further, an Electrically Erasable and Programmable ROM (EEPROM) or the like may be used instead of the flash memory 104 as long as a non-volatile memory for which data reading or writing is performed in accordance with control of the CPU 101 is used.

Further, the terminal program may be recorded and distributed as a file having an installable format or an executable format in a computer-readable recording medium such as the recording medium 106. Further, the terminal program may be stored in the ROM 102 instead of the flash memory 104.

Fig. 5 is a configuration diagram of hardware of the management system 50 according to the present embodiment. The management system 50 includes a CPU 201 that controls the whole operation of the management system 50, a ROM 202 that stores a program such as an IPL used to drive the CPU 201, a RAM 203 used as a work area for the CPU 201, the HD 204 that stores various types of data such as a transmission management program, a Hard Disk Drive (HDD) 205 that controls reading or writing of various types of data from or into the HD 204 in accordance with control of the CPU 201, a media drive 207 that controls reading or writing (storing) of data from or into a recording medium 206 such as a flash memory, a display screen 208 that displays various types of information such as a cursor, menus, a window, characters, or an image, a network I/F 209 that uses the communication network 2 to transmit data, a keyboard 211 that has a plurality of keys for inputting characters, numerical values, various types of instructions, a mouse 212 that selects or executes various instructions, selects an object to be executed, moves the cursor, a CD-ROM drive 214 that controls reading or writing of various types of data from or into a Compact Disc Read Only Memory (CD-ROM) 213 used as an example of a removable recording medium, and a bus line 210 such as an address bus or a data bus that electronically connects the above constituent elements as shown in Fig. 5.

In addition, the transmission management program may be recorded and distributed as a file having an installable format or an executable format in a computer-readable recording medium such as the recording medium 206 or the CD-ROM 213. Further, the transmission management program may be stored in the ROM 202 instead of the HD 204.

Since the relay device 30 has the same hardware confguration as in the management system 50, a description thereof is omitted. However, the HD 204 stores the relay device program for controlling the relay device 30. In this case, the relay device program may also be recorded and distributed as a file having an installable format or an executable format in a computer-readable recording medium such as the recording medium 206 or the CD-ROM 213. Further, the relay device program may be stored in the ROM 202 instead of the HD 204.

Since the program providing system 90 and the maintenance system 100 have the same hardware configuration as in the management system 50, descriptions thereof are omitted. However, the HD 204 stores a program providing program for controlling the program providing system 90. In this case, the program providing program may also be recorded and distributed as a file having an installable format or an executable format in a computer-readable recording medium such as the recording medium 206 or the CD-ROM 213. Further, the program providing program may be stored in the ROM 202 instead of the HD 204.

In addition, the program also may be stored and distributed in a computer-readable recording medium such as a Compact Disc Recordable (CD-R), a Digital Versatile Disk (DVD), a Blu-ray Disk, or the like used as other examples of the removable recording medium.

### «Functional configuration of embodiment»

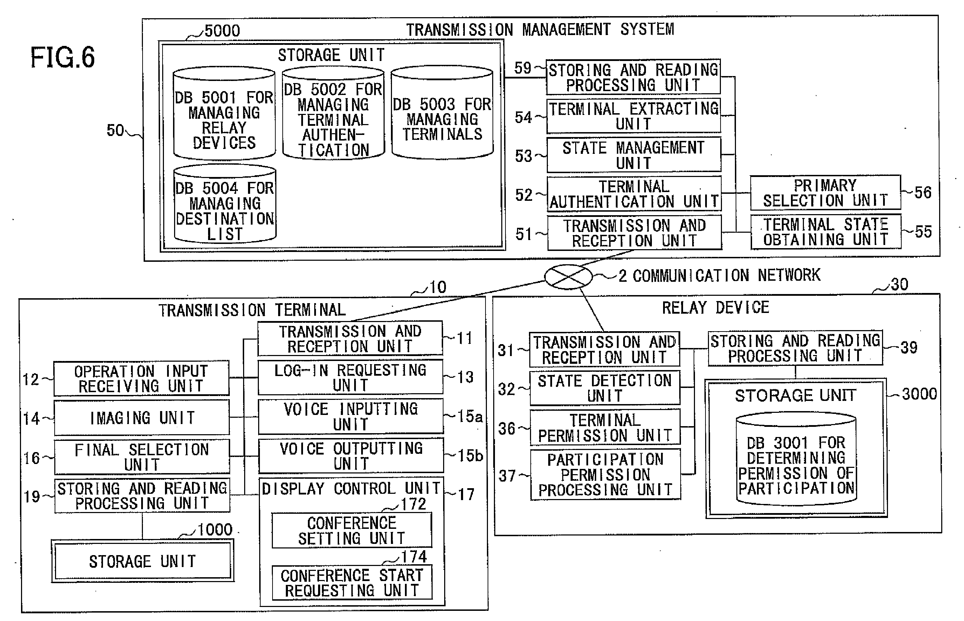

In the following, a functional configuration of the present embodiment is described. Fig. 6 is a functional block diagram of each transmission terminal 10, the relay device 30, and the management system 50 that constitute the transmission system 1 according to the embodiment. In Fig. 6, the terminal 10, the relay device 30, and the management system 50 are connected to be able to perform data communication via the communication network 2. Further, since the program providing system 90 shown in Fig. 1 is not directly related to communication for a video conference, the program providing system 90 is omitted from Fig. 6.

### <Functional configuration of terminal>

The terminal 10 includes a transmission and reception unit 11, an operation input receiving unit 12, a log-in requesting unit 13, an imaging unit 14, a voice inputting unit 15a, a voice outputting unit 15b, a final selection unit 16, a display control unit 17, and a storing and reading processing unit 19. These units are functions or units to function that are implemented when any one of the constituent elements shown in Fig. 4 operates in response to an instruction from the CPU 101 compliant with the terminal program loaded in the RAM 103 from the flash memory 104. Further, the terminal 10 includes a storage unit 1000 configured with the RAM 103 shown in Fig. 4 and the flash memory 104 shown in Fig. 4.

### (Each functional configuration of terminal)

In the following, each functional configuration of the terminal 10 is described in detail with reference to Figs. 4 and 6. When each functional configuration of the terminal 10 is described below, from constituent elements shown in Fig. 4, a relationship with main constituent elements to implement each functional configuration of the terminal 10 is also described.

The transmission and reception unit 11 of the terminal 10 shown in Fig. 6 is implemented with an instruction from the CPU 101 shown in Fig. 4 and the network I/F 111 shown in Fig 4. The transmission and reception unit 11 transmits or receives various types of data (or information) to or from another terminal 10, the relay device 30, or the management system 50 via the communication network 2. The transmission and reception unit 11 starts receiving state information indicating a state of each terminal as a destination candidate from the management system 50 before starting communication with a desired destination terminal. In addition, this state information indicates not only an operation state (online or offline state) of each terminal 10 but also a detailed state of whether a phone call is possible in the online state, whether a user is on the phone, or whether the user is absent. Further, the state information indicates not only the operation state of each terminal 10 but also various conditions that the cable 120c is off the terminal 10, an image is not output while voice is output, or voice is not output (mute). In the following, the state information indicates the operation state, for example.

The operation input receiving unit 12 is implemented with an instruction from the CPU 101 shown in Fig. 4, the operation button 108, and the power switch 109 shown in Fig. 4. The operation input receiving unit 12 receives various inputs by a user. For example, if the user switches the power switch 109 ON, the power switch 109 being shown in Fig. 4, the operation input receiving unit 12 shown in Fig. 6 receives a power-on to switch the terminal 10 ON.

The log-in requesting unit 13 is implemented with an instruction from the CPU 101 shown in Fig. 4. When the power-on is received, the log-in requesting unit 13 automatically transmits log-in request information indicating a log-in request and an IP address of the requestor terminal at this moment from the transmission and reception unit 11 to the management system 50 via the communication network 2. Further, if the user switches the power switch 109 from ON to OFF, after the transmission and reception unit 11 transmits state information about powering OFF to the management system 50, the operation input receiving unit 12 completely powers the terminal 10 OFF. In accordance with this, the management system 50 is able to determine that the terminal 10 is powered OFF.

The imaging unit 14 is implemented with an instruction from the CPU 101 shown in Fig. 4, the camera 112, and the imaging device I/F 113 shown in Fig. 4. The imaging unit 14 captures an image of an object and outputs image data obtained by capturing the image.

The voice inputting unit 15a is implemented with an instruction from the CPU 101 shown in Fig. 4 and the voice inputting and outputting I/F 116 shown in Fig. 4. After voice sound of the user is converted into a voice signal by the microphone 114, the voice inputting unit 15a inputs voice data on this voice signal. The voice outputting unit 15b is implemented with an instruction from the CPU 101 shown in Fig. 4 and the voice inputting and outputting I/F 116 shown in Fig. 4. The voice outputting unit 15b outputs the voice signal of the voice data to the loudspeaker 115 and causes the loudspeaker 115 to output voice sound.

The final selection unit 16 performs a final selection process to finally select one relay device 30 from a plurality of candidates for the relay devices 30 if the user selects to use the corresponding relay device 30.

The display control unit 17 is implemented with an instruction from the CPU 101 shown in Fig. 4 and the display screen I/F 117 shown in Fig. 4. The display control unit 17 performs control to combine image data having different resolution that is received as will be mentioned below and transmit combined image data to the display screen 120. Further, the display control unit 17 can transmit information about a destination list received from the management system 50 to the display screen 120 and display the destination list on the display screen 120.

Further, the display control unit 17 includes a conference setting unit 172 and a conference start requesting unit 174. The conference setting unit 172 sets a conference with a destination terminal. For example, if a report to allow a log-in is received, the report being transmitted by the relay device 30 in reply to a log-in request, the conference setting unit 172 sends a request to set a conference room to the relay device 30. The conference setting unit 172 also sets a conference with the destination terminal via the transmission management system 50. The conference start requesting unit 174 uses a start request including log-in information such as a conference room ID to identify a conference, a conference ID used to utilize the conference, and a password transmitted by the relay device 30 in response to the setting of the conference room requested by the conference setting unit 172 and sends a request to start the conference to the destination terminal via the transmission management system 50.

The storing and reading processing unit 19 is implemented with an instruction from the CPU 101 shown in Fig. 4 and the SSD 105 shown in Fig. 4 or implemented with an instruction from the CPU 101. The storing and reading processing unit 19 performs a process to store various types of data in the storage unit 1000 or read various types of data stored in the storage unit 1000. The storage unit 1000 stores a communication identification (ID) to identify the terminal 10, a password for the communication ID, the conference ID to identify a conference to participate in, and a password for the conference ID. Further, upon each reception, the storage unit 1000 overwrites image data and voice data that are received when a phone call is performed with a destination terminal. An image from image data before it is overwritten is displayed on the display screen 120 and voice sound from voice data before it is overwritten is output by the loudspeaker 115.

The communication ID, the conference ID, and a relay device ID described later according to the present embodiment indicate identification information such as a language, characters, signs, various marks, a mail address, or a unique ID used to uniquely identify communication destinations including the terminal 10, a conference, and the relay device 30. Further, the communication ID, the conference ID, and the relay device ID may include identification information in which at least two of the above language, characters, signs, and various marks are combined.

### <Functional configuration of relay device>

The relay device 30 includes a transmission and reception unit 31, a state detection unit 32, a terminal permission unit 36, a participation permission processing unit 37, and a storing and reading processing unit 39. These units are functions or units to function that are implemented when any one of the constituent elements shown in Fig. 5 operates in response to an instruction from the CPU 201 compliant with the relay device program loaded in the RAM 203 from the HD 204. Further, the relay device 30 includes a storage unit 3000 configured with one or both of the RAM 203 shown in Fig. 5 and the HD 204 shown in Fig. 5.

### (Table for determining permission of participation)

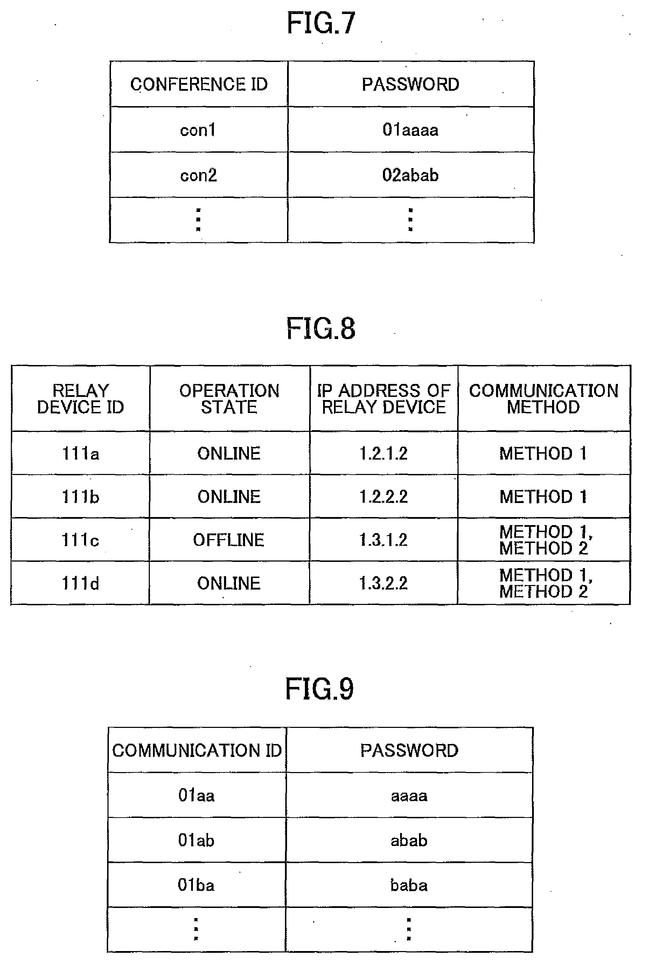

The storage unit 3000 includes a DB 3001 for determining permission of participation configured with a table for determining permission of participation as shown in Fig. 7. In this table for determining permission of participation, each conference ID which includes identification information to identify each conference is managed in association with a password such as a Personal Identification Number (PIN). For example, in the table for determining permission of participation shown in Fig. 7, the password of the conference ID "conl" is "01 aaaa."

### (Each functional configuration of relay device)

In the following, each functional configuration of the relay device 30 is described in detail. When each functional configuration of the relay device 30 is described below, from constituent elements shown in Fig. 5, a relationship with main constituent elements to implement each functional configuration of the relay device 30 is also described.

The transmission and reception unit 31 of the relay device 30 shown in Fig. 6 is implemented with an instruction from the CPU 201 shown in Fig. 5 and the network I/F 209 shown in Fig. 5. The transmission and reception unit 31 transmits or receives various types of data (or information) to or from the terminal 10, another relay device 30, or the management system 50 via the communication network 2.

The state detection unit 32 is implemented with an instruction from the CPU 201 shown in Fig. 5. The state detection unit 32 detects an operation state of the relay device 30 having the state detection unit 32. Examples of the operation state include "online," "offline," "on the phone," and "temporarily suspended."

The terminal permission unit 36 is implemented with an instruction from the CPU 201 shown in Fig. 5. The terminal permission unit 36 performs a permission process in response to log-in request information transmitted by a requestor terminal. When a log-in process is performed, the terminal permission unit 36 refers to a table for managing terminal authentication stored in a DB 5002 for managing terminal authentication included in the transmission management system 50 and performs the permission process depending on whether there is an item that matches a combination of a communication ID and a password included in a permission request. Further, to the transmission management system 50, the terminal permission unit 36 may transfer the permission request transmitted by the requestor terminal and request the permission process. Further, the requestor terminal may obtain an access token issued by the transmission management system 50 and transmit a permission request including the access token. In this case, the terminal permission unit 36 performs the permission process depending on a verification result of the access token included in the permission request.

The participation permission processing unit 37 is implemented with an instruction from the CPU 201 shown in Fig. 5. The participation permission processing unit 37 creates a conference room in response to a request for creating a conference room received by the transmission and reception unit 31, associates the conference ID serving as identification information to identify a conference held in the conference room with a password such as a PIN, and stores the conference ID and the password in the DB 3001 for determining permission of participation. Then the participation permission processing unit 37 searches the DB 3001 for determining permission of participation in the storage unit 3000 while using a conference ID and a password as a search key, the conference ID and the password being included in a log-in request. The participation permission processing unit 37 determines whether to permit participation by determining whether the same conference ID and password are managed in the DB 3001 for determining permission of participation.

The storing and reading processing unit 39 is implemented with an instruction from the CPU 201 shown in Fig. 5 and the HDD 205 shown in Fig. 5. The storing and reading processing unit 39 performs a process to store various types of data in the storage unit 3000 or to read various types of data stored in the storage unit 3000.

### <Functional configuration of management system>

The management system 50 includes a transmission and reception unit 51, a terminal authentication unit 52, a state management unit 53, a terminal extracting unit 54, a terminal state obtaining unit 55, a primary selection unit 56, and a storing and reading processing unit 59. These units are functions or units to function that are implemented when any one of the constituent elements shown in Fig. 5 operates in response to an instruction from the CPU 201 compliant with the transmission management program loaded in the RAM 203 from the HD 204. Further, the management system 50 includes a storage unit 5000 configured with the HD 204 shown in Fig. 5.

### (Table for managing relay devices)

The storage unit 5000 includes a DB 5001 for managing relay devices configured with a table for managing relay devices as shown in Fig. 8. In this table for managing relay devices, each relay device ID of each relay device 30 is managed in association with an operation state of the relay device 30, an IP address of the relay device 30, and a communication method supported by the relay device 30. The communication method may be determined based on an encoding method, a transmission band, or the like. In this case, an example of Method 1 includes H.264/AVC and an example of Method 2 includes H.264/SVC. If a terminal supports Method 1, the terminal can transmit or receive pictures transmitted or received in Method 1 by the relay device 30. If the terminal supports Method 2, the terminal can transmit or receive pictures transmitted or received in Method 2 by the relay device 30. For example, the table for managing relay devices shown in Fig. 8 indicates that the relay device 30a with the relay device ID "111a" has the operation state "online," the relay device 30a has the IP address "1.2.1.2," and the relay device 30a supports Method 1 as the communication method.

### (Table for managing terminal authentication)

The storage unit 5000 further includes a DB 5002 for managing terminal authentication configured with a table for managing terminal authentication as shown in Fig. 9. In this table for managing terminal authentication, each communication ID of each terminal 10 managed by the management system 50 is managed in association with a password. For example, the table for managing terminal authentication shown in Fig. 9 indicates that the terminal 10aa has the communication ID "01aa" and the password "aaaa."

### (Table for managing terminals)

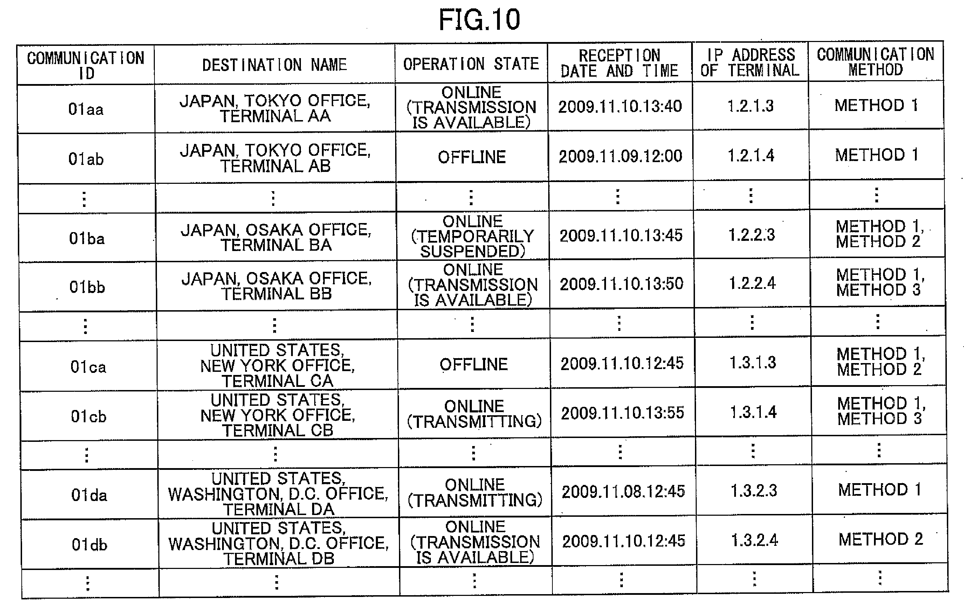

The storage unit 5000 further includes a DB 5003 for managing terminals configured with a table for managing terminals as shown in Fig. 10. In this table for managing terminals, each communication ID of each terminal 10 is managed in association with a destination name indicating the terminal 10 as a destination, an operation state of the terminal 10, a reception date and time when log-in request information described later is received by the management system 50, an IP address of the terminal 10, and a communication method supported by the terminal 10. In this case, "Method 3" described in the column of the communication method indicates a communication method such as Web Real-Time Communication (WebRTC) for direct communication between terminals without the relay device 30. For example, the table for managing terminals shown in Fig. 10 indicates that the terminal 10aa with the communication ID "01aa" has the destination name "Japan, Tokyo office, terminal AA," and the operation state "online (phone call is available)", the reception date and time when log-in request information is received by the management system 50 is "thirteen forty in November 10, 2009," the terminal 10aa has the IP address "1.2.1.3," and the terminal 10aa supports "Method 1" as the communication method.

### (Table for managing destination list)

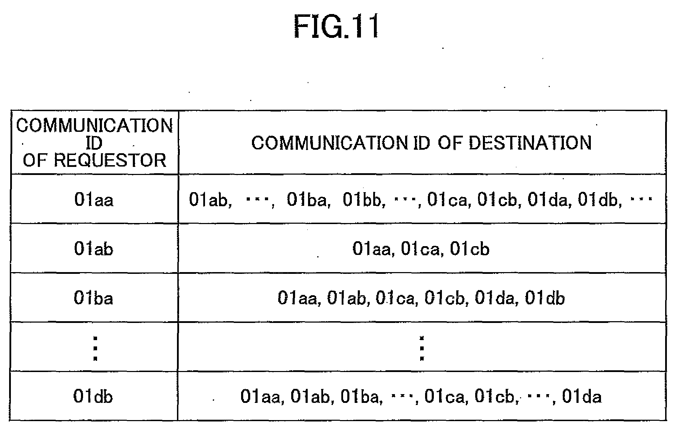

The storage unit 5000 further includes a DB 5004 for managing a destination list configured with a table for managing a destination list as shown in Fig. 11. In the table for managing a destination list, a communication ID of a requestor terminal that sends a request for starting a call in a video conference is managed in association with all of communication IDs of destination terminals registered as candidates for a destination terminal. For example, the table for managing a destination list shown in Fig. 11 indicates that candidates for the destination terminal to which the requestor terminal (terminal 10aa) with the communication ID "01aa" can send a request for starting a call in a video conference include the terminal 10ab with the communication ID "01ab," the terminal 10ba with the communication ID "01ba," the terminal 10bb with the communication ID "01bb," and the like. The candidates for the destination terminal are updated by adding or deleting a communication ID in response to a request for addition or deletion from any requestor terminal to the management system 50.

### (Each functional configuration of management system)

In the following, each functional configuration the management system 50 is described in detail. When each functional configuration of the management system 50 is described below, from constituent elements shown in Fig. 5, a relationship with main constituent elements to implement each functional configuration of management system 50 is also described.

The transmission and reception unit 51 is implemented with an instruction from the CPU 201 shown in Fig. 5 and the network I/F 209 shown in Fig. 5. The transmission and reception unit 51 transmits or receives various types of data (or information) to or from the terminal 10, relay device 30, or another management system 50 via the communication network 2.

The terminal authentication unit 52 is implemented with an instruction from the CPU 201 shown in Fig. 5. The terminal authentication unit 52 searches the DB 5002 for managing terminal authentication in the storage unit 5000 while using a communication ID and a password as a search key, the communication ID and the password being included in log-in request information received by the transmission and reception unit 51. The terminal authentication unit 52 performs terminal authentication by determining whether the same communication ID and the password are managed in the DB 5002 for managing terminal authentication..

The state management unit 53 is implemented with an instruction from the CPU 201 shown in Fig. 5. In order to manage an operation state of a requestor terminal that sends a log-in request, the state management unit 53 stores and manages the communication ID of the requestor terminal in association with an operation state of the requestor terminal, a reception date and time when log-in request information is received by the management system 50, an IP address of the requestor terminal, and a communication method supported by the requestor terminal in the DB 5003 for managing terminals (see Fig. 10). Further, based on state information about powering OFF sent by the terminal 10 when the user switches the power switch 109 of the terminal 10 from ON to OFF, the state management unit 53 changes the operation state indicating online in the DB 5003 for managing terminals (see Fig. 10) to offline.

The terminal extracting unit 54 is implemented with an instruction from the CPU 201 shown in Fig. 5. The terminal extracting unit 54 searches the DB 5004 for managing a destination list (see Fig. 11) while using the communication ID of the requestor terminal that has sent the log-in request as a search key, and the terminal extracting unit 54 reads communication IDs of candidates for a destination terminal that can have a phone call with the requestor terminal, thereby extracting the communication IDs. Further, the terminal extracting unit 54 also searches the DB 5004 for managing a destination list (see Fig. 11) while using the communication ID of the requestor terminal that has sent the log-in request as a search key and the terminal extracting unit 54 also extracts communication IDs of other requestor terminals that have registered the communication ID of the above requestor terminal as a candidate for the destination terminal.

The terminal state obtaining unit 55 is implemented with an instruction from the CPU 201 shown in Fig. 5. The terminal state obtaining unit 55 searches the DB 5003 for managing terminals (see Fig. 10) while using the communication IDs of the candidates for the destination terminal extracted by the terminal extracting unit 54 and the terminal state obtaining unit 55 reads an operation state for each communication ID extracted by the terminal extracting unit 54. In accordance with this, the terminal state obtaining unit 55 is capable of obtaining the operation states of the candidates for the destination terminal that can have a phone call with the requestor terminal that sends the log-in request. Further, the terminal state obtaining unit 55 also searches the DB 5003 for managing terminals while using the communication ID extracted by the terminal extracting unit 54 as a search key, and obtains the operation state of the requestor terminal that has sent the log-in request.

The primary selection unit 56 is implemented with an instruction from the CPU 201 shown in Fig. 5. The primary selection unit 56 performs a primary selection process before a final selection process in order to support the final selection process to finally select one relay device 30 from the relay devices 30.

The storing and reading processing unit 59 is implemented with an instruction from the CPU 201 shown in Fig. 5 and the HDD 205 shown in Fig. 5. The storing and reading processing unit 59 performs a process to store various types of data in the storage unit 5000 or read various types of data stored in the storage unit 5000.

### «Process or operation in embodiment»

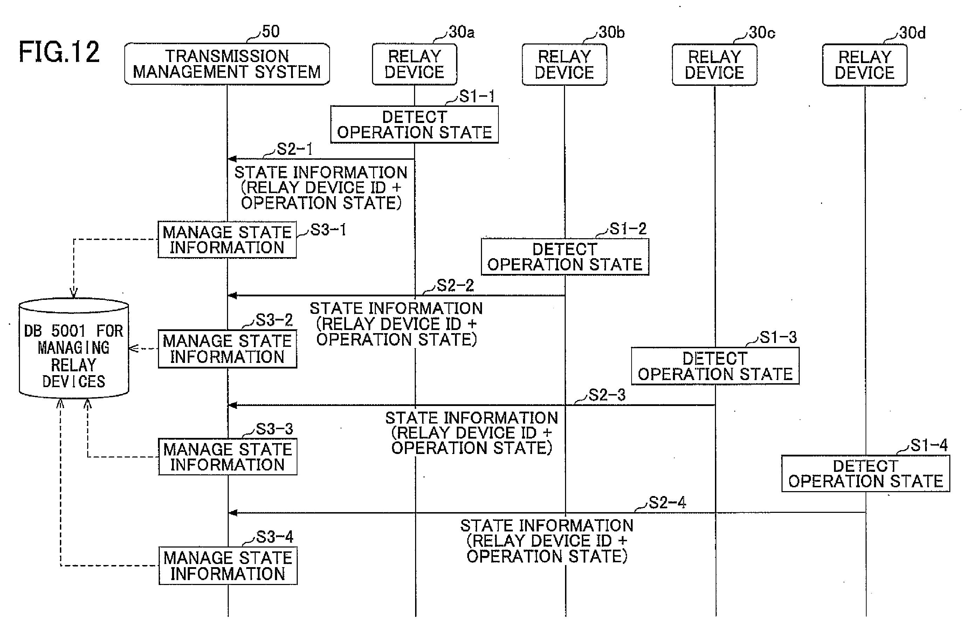

In the following, a process in the transmission system 1 according to the present embodiment is described. Fig. 12 is a sequence chart showing a process to manage state information showing a state of each relay device 30 transmitted to the management system 50 from each relay device 30.

First, a process to manage state information to indicate a state of each relay device 30 transmitted to the management system 50 from each relay device 30 is described with reference to Fig. 12. In each relay device 30, the state detection unit 32 shown in Fig. 6 periodically detects an operation state of the relay device 30 as its own device (steps S1-1 to S1-4). The transmission and reception unit 31 of each relay device 30 periodically transmits state information to the management system 50 via the communication network 2 so that the management system 50 manages an operation state of each relay device 30 in real time (steps S2-1 to S2-4). Each piece of state information includes the relay device ID of each relay device 30 and the operation state detected by the state detection unit 32 of the relay devices 30 having the relay device ID, In the present embodiment, the relay devices (30a, 30b, 30d) operate normally and show "online," while the relay device 30c operates but has some trouble in a program to perform a relaying operation of the relay device 30c and shows "offline."

Next, in the management system 50, the transmission and reception unit 51 receives each piece of state information transmitted from each relay device 30 and the state information is stored and managed for each relay device ID in the DB 5001 for managing relay devices (see Fig. 8) in the storage unit 5000 via the storing and reading processing unit 59 (steps S3-1 to S3-4). In accordance with this, in the table for managing relay devices as shown in Fig. 8, for each relay device ID, any one of operation states such as "online," "offline," and "failure" is stored and managed. In addition, if the state information is not transmitted from the relay device 30, a field section of the operation state of each record in the table for managing relay devices shown in Fig. 8 is left blank or indicates the operation state in a previous reception.

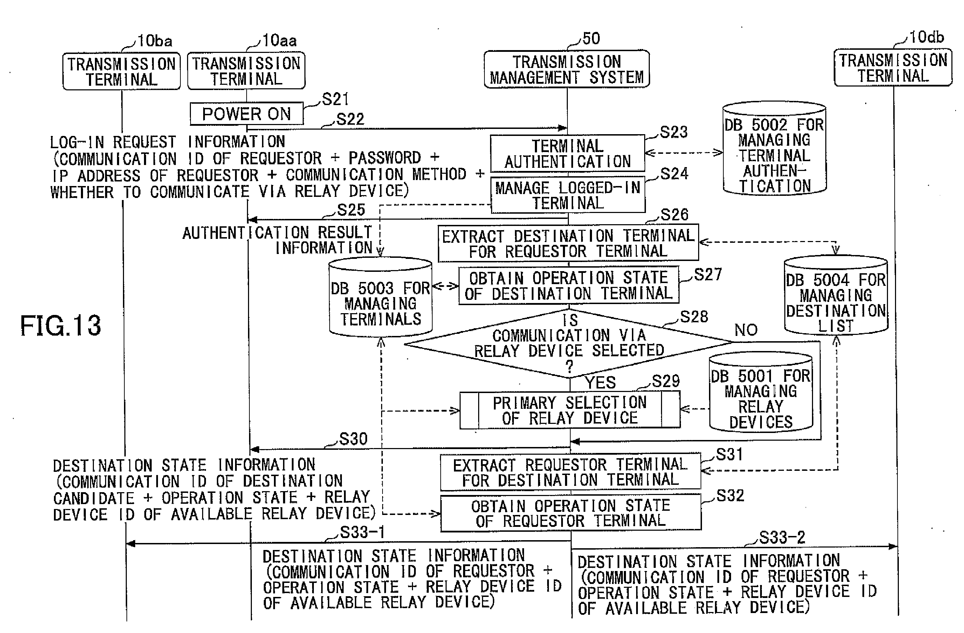

Next, with reference to Fig. 13, a process to transmit and receive various types of management information in a preparation stage before a phone call starts between the terminal 10aa and the terminal 10db is described. In addition, in Fig. 13, all of the various types of management information are transmitted and received over the management information session sei shown in Fig. 2.

First, when the user switches the power switch 109 ON, the power switch 109 being shown in Fig. 4, the operation input receiving unit 12 shown in Fig. 6 receives a power-on to switch the terminal 10aa ON (step S21). When the power-on is received, the log-in requesting unit 13 automatically transmits log-in request information indicating a log-in request from the transmission and reception unit 11 to the management system 50 via the communication network 2 (step S22). This log-in request information includes the communication ID to identify the own terminal 10aa as a requestor, a password, the IP address of the terminal 10aa, a communication method supported by the terminal 10aa ,and information indicating whether to perform communication via the relay device 30. These communication ID, the password, the IP address of the terminal 10aa, and the communication method supported by the terminal 10aa are data read from the storage unit 1000 via the storing and reading processing unit 19 and sent to the transmission and reception unit 11. The information indicating whether to perform communication via the relay device 30 is received by the operation input receiving unit 12 when the information is specified by the user. In addition, when the log-in request information is transmitted from the terminal 10aa to the management system 50, the management system 50 on a reception side is capable of determining the IP address of the terminal 10aa on a transmission side.

Next, the terminal authentication unit 52 of the management system 50 searches the DB 5002 for managing terminal authentication (see Fig. 9) in the storage unit 5000 while using the communication ID and the password as a search key, the communication ID and the password being included in the log-in request information received by the transmission and reception unit 51, and performs terminal authentication by determining whether the same communication ID and the password are managed in the DB 5002 for managing terminal authentication (step S23). If the terminal authentication unit 52 determines that the log-in request is sent from an authorized terminal 10 because the same communication ID and the password are managed, the state management unit 53 stores, in the DB 5003 for managing terminals (see Fig. 10), the communication ID of the terminal 10aa in association with an operation state, a reception time and date when the log-in request information is received, the IP address of the terminal 10aa, and the communication method supported by the terminal 10aa (step S24). In accordance with this, in the table for managing terminals shown in Fig. 10, the communication ID "01aa" is managed in association with the operation state "online," the reception time and date "2009.11.10.13:40," the IP address of the terminal 10aa "1.2.1.3," and the communication method "Method 1."

Then the transmission and reception unit 51 of the management system 50 transmits authentication result information indicative of an authentication result obtained by the terminal authentication unit 52 to the requestor terminal (terminal 10aa) via the communication network 2, the requestor terminal having sent a log-in request (step S25). In the present embodiment, the case where the terminal 10aa is determined by the terminal authentication unit 52 to be an authorized terminal is described in the following.

The terminal extracting unit 54 of the management system 50 searches the DB 5004 for managing a destination list (see Fig. 11) while using the communication ID "01aa" of the requestor terminal (10aa) that sent a log-in request as a search key, and the terminal extracting unit 54 reads and extracts communication IDs of candidates for the destination terminal that can communicate with the requestor terminal (terminal 10aa) (step S26). In this case, communication IDs ("01ab," "01ba," "01db") of destination terminals (terminals 10ab, 10ba, 10db) in association with the communication "01aa" of the requestor terminal (terminal 10aa) are extracted.

Next, the terminal state obtaining unit 55 searches the DB 5003 for managing terminals (see Fig. 10) while using the communication IDs ("01ab," "01ba," "01db") of the candidates for the destination terminal extracted by the terminal extracting unit 54 and the terminal state obtaining unit 55 obtains operation states of the terminals (10ab, 10ba, 10db) by reading a corresponding operation state ("offline," "online," "online") for each communication ID extracted by the terminal extracting unit 54 (step S27).

Next, the primary selection unit 56 determines whether the log-in request information received by the transmission and reception unit 51 includes information that specifies communication via the relay device 30 (step S28).

If the log-in request information includes information indicating performing communication via the relay device 30, the primary selection unit 56 searches the DB 5001 for managing relay devices (see Fig. 8) while using the communication method supported by the terminal 10aa as a search key, the communication method being included in the log-in request information received by the transmission and reception unit 51, and the primary selection unit 56 reads and extracts relay device IDs (111a, 111b, 111d) of candidates for a relay device that support the communication method supported by the terminal 10aa and whose operation state is "online."

The primary selection unit 56 searches the DB 5001 for managing relay devices (see Fig. 8) while using communication methods ("Method 1, Method 2," "Method 2") as a search key, the communication methods being supported by those terminals (10ba, 10db) whose operation state obtained by the terminal state obtaining unit 55 is "online" among the candidates (10ab, 10ba, 10db) for the destination terminal, and the primary selection unit 56 reads and extracts the relay device IDs of candidates for a relay device that support any one of the communication methods supported by the terminals (10ba, 10db) and whose operation state is "online" (step S29). In this case, the terminal (10ba) supports "Method I" and "Method 2" and the relay devices 30a, 30b, and 30d are "online," so that relay device IDs ("111a," "111b," "111d") of relay devices that support "Method I" or "Method 2" are extracted. Further, the terminal 10db supports "Method 2" and the relay devices 30a, 30b, and 30d are "online," so that a relay device ID "111d" that supports "Method 2" is extracted (step S29).

If information indicating performing communication via the relay device 30 is not included in the log-in request information in step S28 or the process in step S29 ends, the transmission and reception unit 51 transmits destination state information indicating a destination state to the terminal 10aa (step S30). This destination state information includes the communication IDs of candidates for the destination terminal extracted in step S26, the operation states of terminals of the candidates for the destination, and the relay device IDs of relay devices that can be used to communicate with the terminals of the candidates for the destination if the log-in request information includes information indicating performing communication via the relay device 30 in step S28. In accordance with this, the requestor terminal (terminal 10aa) is capable of determining operation states ("offline", "online", "online") of the terminals (10ab, 10ba, 10db) at this moment, the terminals being candidates for the destination terminal that can communicate with the requestor terminal (terminal 10aa), and the relay devices that can be used for each terminal of candidates for the destination terminal if the relay device 30 is used to perform communication.

Further, the terminal extracting unit 54 of the management system 50 searches the DB 5004 for managing a destination list (see Fig. 11) while using the communication ID "01aa" of the requestor terminal (terminal 10aa) that has sent the log-in request, and the terminal extracting unit 54 extracts communication IDs of other requestor terminals that have registered the communication ID "01aa" of the above requestor terminal (terminal 10aa) as a candidate for a destination terminal (step S31). In the table for managing a destination list shown in Fig. 11, the communication IDs of other requestor terminals to be extracted include "01ab," "01ba," and "01db."

Next, the terminal state obtaining unit 55 of the management system 50 searches the DB 5003 for managing terminals (see Fig. 10) while using the communication ID "01aa" of the requestor terminal (terminal 10aa) that has sent the log-in request as a search key, and the terminal state obtaining unit 55 obtains the operation state of the requestor terminal (terminal 10aa) that has sent the log-in request (step S32).

To the terminals (10ba, 10db) whose operation state is "online" in the DB 5003 for managing terminals (see Fig. 10) among the terminals (10ab, 10ba, 10db) having the communication IDs "01ab," "01ba," "01db" extracted in step S31, the transmission and reception unit 51 transmits destination state information including the communication ID "01aa" of the requestor terminal (terminal 10aa), the state information "online" obtained in step S32, and the relay device ID of the relay device that is available if the relay device is to be used (steps S33-1, 33-2). In addition, when the transmission and reception unit 51 transmits the destination state information to the terminals (10ba, 10db), based on each of the communication IDs ("01ba," "01db"), the transmission and reception unit 51 refers to IP addresses of the terminals managed in the table for managing terminals shown in Fig. 10. In accordance with this, it is possible to transmit, to each of other destination terminals (10db, 10ba) that can communicate with the requestor terminal (terminal 10aa) as a destination, the requestor terminal having sent the log-in request, the communication ID "01aa" of the requestor terminal (terminal 10aa) that has sent the log-in request, the operation state "online," and the relay device ID of the relay device that is available when communicating with the terminals of candidates for the destination if the relay device is to be used.

In another terminal 10, when the user switches the power switch 109 ON, the power switch 109 being shown in Fig. 4, the operation input receiving unit 12 shown in Fig. 6 receives a power-on in the same manner as in step S21 and performs the same process as in steps S22 to S33-1, S33-2. Accordingly, the description thereof is omitted.

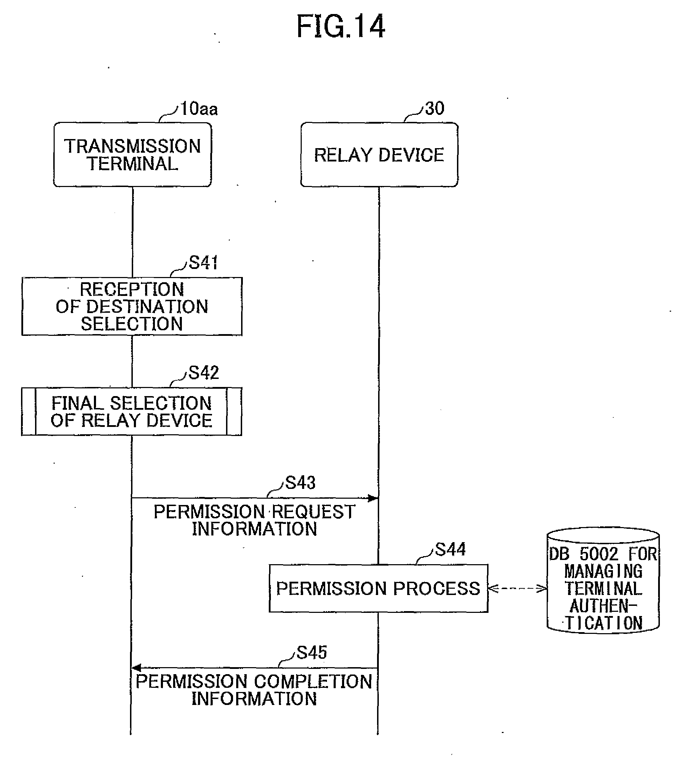

In the following, a process to select the relay device 30 is described with reference to Fig. 14. Further, in the present embodiment, among the terminals 10 which are candidates for the destination, the requestor terminal (terminal 10aa) can have a phone call with at least one of the terminals (10ba, 10db) whose operation state is online based on the destination state information of the terminal received in step S30. Accordingly, the following describes a case where the user of the requestor terminal (terminal 10aa) selects starting a phone call with the destination terminal (terminal 10ba).

First, when the user presses the operation button 108 shown in Fig. 4 and selects the terminal 10ba, the operation input receiving unit 12 shown in Fig. 6 receives a request for starting a phone call with the destination terminal (terminal 10ba) (step S41). Upon starting a conference with the destination terminal (terminal 10ba), the requestor terminal (terminal 10aa) makes a final selection of one of relay devices 30 when the user selects starting the conference with the destination terminal (terminal 10ba). As described above, the relay device IDs ("111a," "1111b," "111d") of relay devices that can be used when a conference is held with the destination terminal (terminal 10ba) are reported to the requestor terminal (terminal 10aa) in the destination state information. Accordingly, from the reported relay device IDs, a final selection of one of the relay devices to use is made (step S42). The final selection unit 16 shown in Fig. 6 may randomly select the relay device to use from the reported relay device IDs or may select the relay device closest to the requestor terminal (terminal 10aa). If the closest relay device is selected, the final selection unit 16 transmits some response request such as a permission request to all the relay devices reported in the destination state information from the transmission and reception unit 11 and selects such a relay device that first transmits a reply. After the relay device is selected by the final selection unit 16, the log-in requesting unit 13 transmits permission request information to the relay device in order to hold a conference via the selected relay device (step S43).

Next, the terminal permission unit 36 of the relay device 30 searches the DB 5002 for managing terminal authentication (see Fig. 9) in the storage unit 5000 while using the communication ID and the password as a search key, the communication ID and the password being included in the permission request information received by the transmission and reception unit 31, and the terminal permission unit 36 performs terminal authentication by determining whether the same communication ID and the password are managed in the DB 5002 for managing terminal authentication (step S44).

If the terminal permission unit 36 determines that the permission request is sent from an authorized terminal 10 because the same communication ID and the password are managed, the terminal permission unit 36 transmits permission completion information indicating permission to the terminal 10 from the transmission and reception unit 31 (step S45).

In step S44, for example, the terminal permission unit 36 may transmit the permission request information to the management system 50 to request for terminal authentication. In this case, the terminal authentication unit 52 of the management system 50 searches the DB 5002 for managing terminal authentication (see Fig. 9) in the storage unit 5000 while using the communication ID and the password as a search key, the communication ID and the password being included in the permission request information, and the terminal authentication unit 52 performs terminal authentication by determining whether the same communication ID and the password are managed in the DB 5002 for managing terminal authentication. Further, when the log-in requesting unit 13 of the requestor terminal (terminal 10aa) transmits the permission request information to the relay device in order to hold a conference via the selected relay device, the log-in requesting unit 13 may obtain an access token issued by the management system 50 and transmit a permission request including the access token. In this case, the terminal permission unit 36 performs the permission process depending on a verification result of the access token included in the permission request.

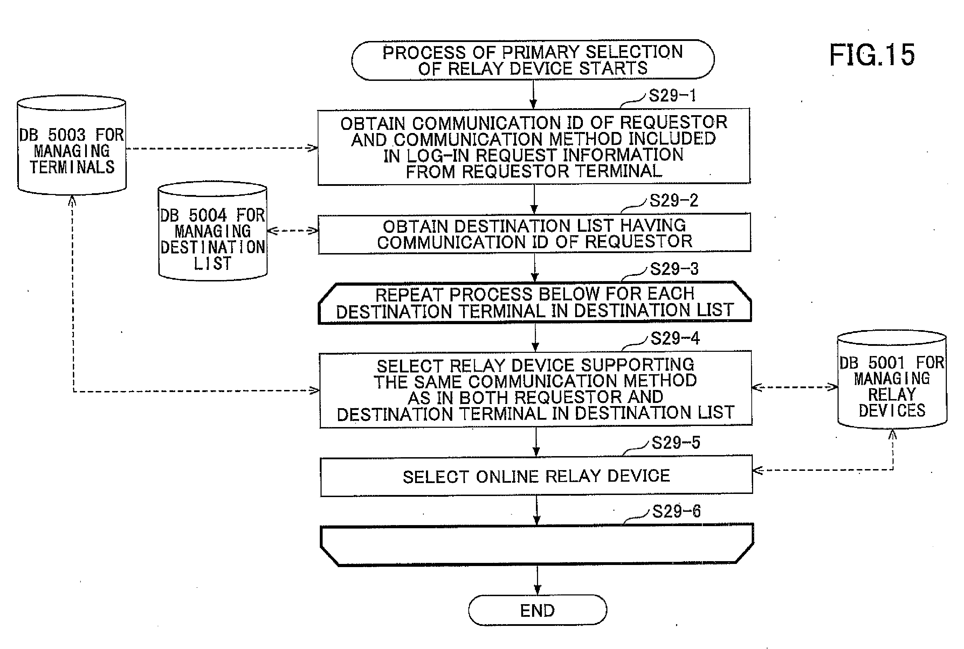

In the following, the process in step S29 is further described in detail with reference to Fig. 6 and Fig. 15. First, the terminal extracting unit 54 shown in Fig. 6 obtains the communication ID "01aa" and the communication method of the requestor terminal (terminal 10aa) included in the log-in request information transmitted from the requestor terminal (terminal 10aa) (step S29-1).

Next, the terminal extracting unit 54 searches the DB 5004 for managing a destination list (see Fig. 11) while using the communication ID of the requestor terminal that has sent the log-in request as a search key, and the terminal extracting unit 54 reads communication IDs of candidates for the destination terminal that can have a phone call with the requestor terminal, thereby extracting the communication IDs (step S29-2).

The following process from step S29-4 to step S29-5 is performed for each destination terminal included in the DB 5004 for managing a destination list (step S29-3).

The primary selection unit 56 selects relay devices 30 that support the communication method supported by both of the requestor terminal (terminal 10aa) and the candidates for the destination terminal (step S29-4).

The primary selection unit 56 searches the DB 5001 for managing relay devices (see Fig. 8) and reads and selects relay device IDs of candidates for a relay device that are selected in step S29-4 and whose operation state is "online" (step S29-5).

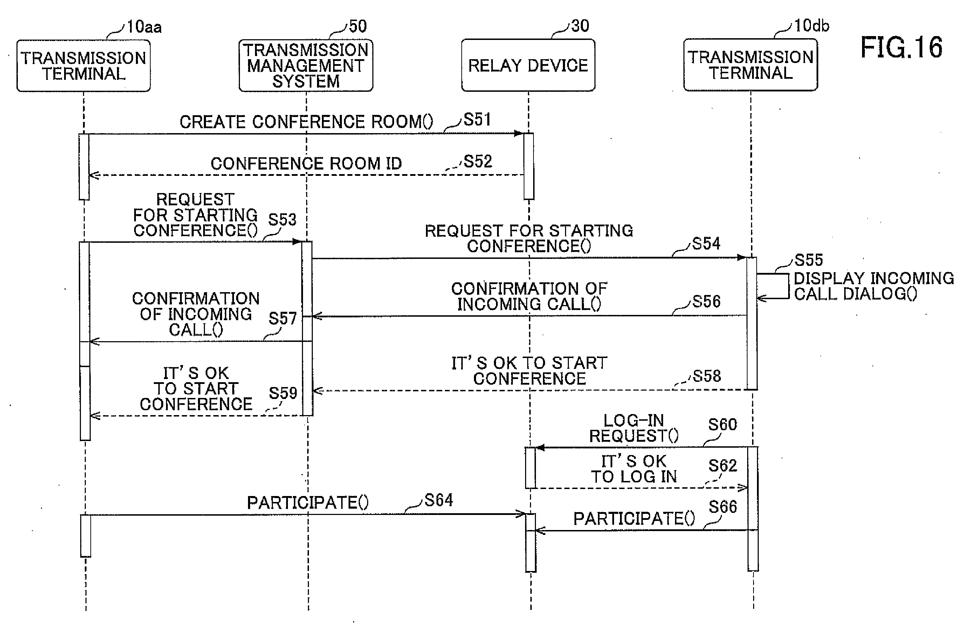

With reference to Fig. 16, the following describes a process after the use of the relay device 30 for performing communication is selected by the requestor terminal (terminal 10aa) and the relay device to use is selected.

The conference setting unit 172 of the requestor terminal (terminal 10aa) sends a request for creating a conference room to the selected relay device (step S51).

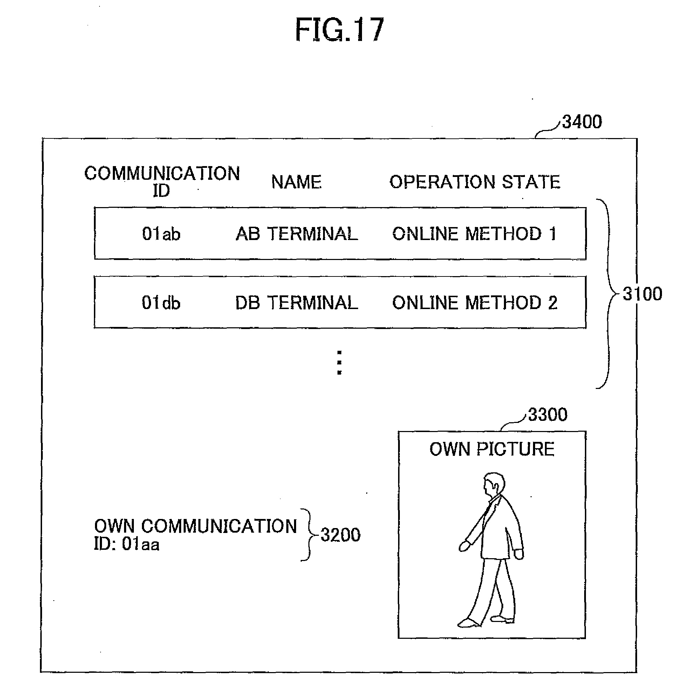

Next, the participation permission processing unit 37 of the relay device 30 creates a conference room in response to the request for creating a conference room sent by the requestor terminal (terminal 10aa), associates a conference ID to identify a conference held in the conference room with a password such as a PIN, and stores the conference ID and the password in the DB 3001 for determining permission of participation. The participation permission processing unit 37 transmits a conference room ID, the conference ID, and the password from the transmission and reception unit 31 to the requestor terminal (terminal 10aa) (step S52). When the transmission and reception unit 11 of the requestor terminal (terminal 10aa) receives the conference room ID, the conference ID, and the password transmitted from the relay device 30, the display control unit 17 creates a destination list and displays the destination list on the display screen 120. In this case, the display screen 120 of the requestor terminal (terminal 10aa) displays a destination list as shown in Fig. 17, for example. Fig. 17 is a diagram illustrating a destination list display. A destination list display 3400 shown in Fig. 17 includes a destination list 3100, a communication ID 3200 of its own terminal, and a display 3300 of a picture taken by its own terminal. The destination list 3100 displays a list of transmission terminals as candidates for a destination terminal of the requestor terminal (terminal 10aa). The list of candidates for the destination terminal displays information about the communication ID, the name, the operation state, and an available communication method of the candidates for the destination terminal.

Next, the conference start requesting unit 174 of the requestor terminal (terminal 10aa) transmits a request for starting a conference to the transmission management system 50 (step S53). The request for starting a conference includes the communication ID of the requestor terminal (terminal 10aa), the communication ID of the destination terminal (terminal 10db), the conference room ID, conference ID, and the password.

Next, the transmission and reception unit 51 of the transmission management system 50 transmits the request for starting a conference to the destination terminal (terminal 10db) (step S54).

Next, the transmission and reception unit 11 of the destination terminal (terminal 10db) receives the request for starting a conference transmitted by the transmission management system 50. When the transmission and reception unit 11 receives the request for starting a conference, the display control unit 17 of the destination terminal displays an incoming call dialog and receives the request for starting a conference (step S55).

Next, the transmission and reception unit 11 of the destination terminal (terminal 10db) transmits a confirmation of the incoming call (step S56).

Next, when the transmission and reception unit 51 of the transmission management system 50 receives the confirmation of the incoming call transmitted by the destination terminal, the transmission and reception unit 51 transmits the confirmation of the incoming call to the requestor terminal (step S57). In this case, the requestor terminal may report that the destination terminal is being called.

Next, if a start of the conference is allowed in response to the incoming call dialog, the conference setting unit 172 of the destination terminal (terminal 10db) transmits information indicating that it is OK to start the conference to mean that the start of the conference is allowed from the transmission and reception unit 11 to the transmission management system 50 (step S58).

Next, when the transmission and reception unit 51 of the transmission management system 50 receives information indicating that it is OK to start the conference transmitted by the destination terminal, the transmission and reception unit 51 transmits the information indicating that it is OK to start the conference to the requestor terminal (step S59).

Next, the log-in requesting unit 13 of the destination terminal (terminal 10db) transmits a log-in request for participating in the conference from the transmission and reception unit 11 to the relay device 30 (step S60).

Next, the participation permission processing unit 37 of the relay device 30 searches the DB 3001 for determining permission of participation in the storage unit 3000 while using the conference ID and the password as a search key, and the participation permission processing unit 37 determines whether to permit the participation by determining whether the same conference ID and the password are managed in the DB 3001 for determining permission of participation. In this case, the same conference ID and the password as included in the log-in request are managed in the DB 3001 for determining permission of participation.

Next, the participation permission processing unit 37 of the relay device 30 transmits information indicating that it is OK to log in to mean that the participation is allowed from the transmission and reception unit 31 to the destination terminal (step S62).

Next, a session is established between the requestor terminal (terminal 10aa) and the relay device 30 (step S64). In accordance with this, the requestor terminal (terminal 10aa) can participate in the conference.

Next, a session is established between the destination terminal (terminal 10db) and the relay device 30. In accordance with this, the destination terminal (terminal 10db) can participate in the conference.

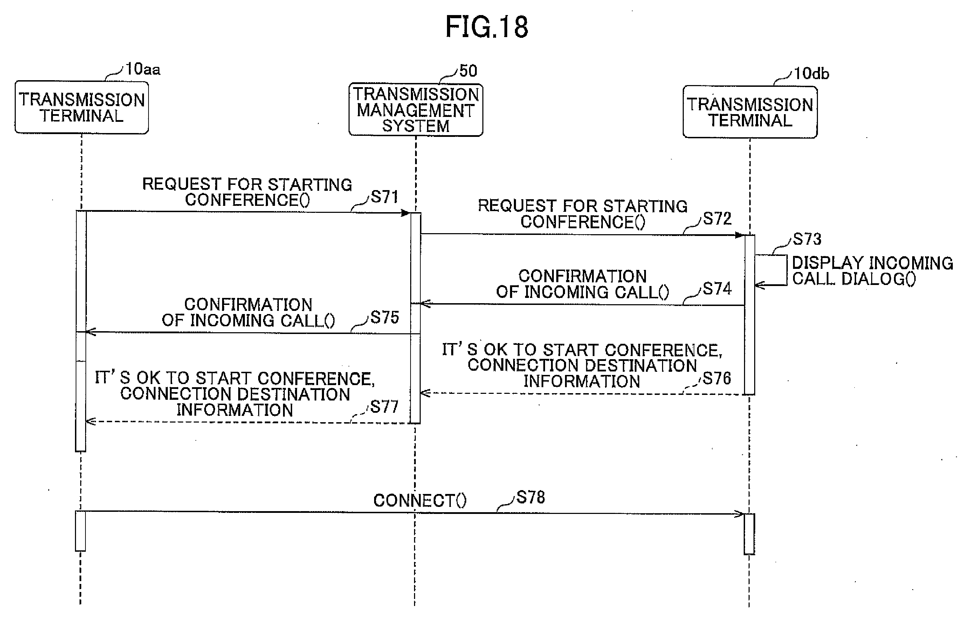

With reference to Fig. 18, the following describes a process after communication without the relay device 30 is selected.

The conference start requesting unit 174 of the requestor terminal (terminal 10aa) transmits a request for starting a conference to the transmission management system 50 (step S71). The request for starting a conference includes information indicating the communication ID of the requestor terminal (terminal 10aa), the communication ID of the destination terminal (terminal 10db), and Method 3.

Next, the transmission and reception unit 51 of the transmission management system 50 transmits the request for starting a conference to the destination terminal (terminal 10db) (step S72).

Next, the transmission and reception unit 11 of the destination terminal (terminal 10db) receives the request for starting a conference transmitted by the transmission management system 50. When the transmission and reception unit 11 receives the request for starting a conference, the display control unit 17 of the destination terminal displays an incoming call dialog and receives the request for starting a conference (step S73).

Next, the transmission and reception unit 11 of the destination terminal (terminal 10db) transmits a confirmation of the incoming call (step S74).

Next, when the transmission and reception unit 51 of the transmission management system 50 receives the confirmation of the incoming call transmitted by the destination terminal, the transmission and reception unit 51 transmits the confirmation of the incoming call to the requestor terminal (step S75). In this case, the requestor terminal may report that the destination terminal is being called.

Next, if a start of the conference is allowed in response to the incoming call dialog, the conference setting unit 172 of the destination terminal (terminal 10db) transmits information indicating that it is OK to start the conference to mean that the start of the conference is allowed from the transmission and reception unit 11 to the transmission management system 50 (step S76). The information indicating that it is OK to start the conference is provided with connection destination information.

Next, when the transmission and reception unit 51 of the transmission management system 50 receives information indicating that it is OK to start the conference transmitted by the destination terminal, the transmission and reception unit 51 transmits the information indicating that it is OK to start the conference to the requestor terminal (step S77).

Next, a session is established between the requestor terminal (terminal 10aa) and the destination terminal (terminal 10db) (step S78). In accordance with this, the requestor terminal (terminal 10aa) can directly perform communication with the destination terminal (terminal 10db).

### «Main effects of present embodiment»

According to the present embodiment, the terminal performs control of connection to the relay device and a process such as management of a conference room that have been performed by a call control device such as a transmission management device and information necessary to participate in the conference is shared in the call control device. In accordance with this, since information specific to the relay device such as an authentication method is processed between the relay device and the terminal without using the call control device, replacement or addition of a relay device is readily possible.

### (Supplementation of embodiment)

In the above embodiment, the relay device 30, the transmission management system 50, the program providing system 90, and the maintenance system 100 may be constructed with a single computer and each part (function or unit) may be divided and constructed with a plurality of computers assigned arbitrarily. Further, if the program providing system 90 is constructed with a single computer, a program to be transmitted by the program providing system 90 may or may not be divided into a plurality of modules when transmitted. Further, if the program providing system 90 is constructed with a plurality of computers, divided modules may be transmitted from each computer.

Further, in the above embodiment, a video conference terminal is described as an example of the transmission terminal. However, the transmission terminal is not limited to this but may be a phone system such as an Internet Protocol (IP) phone or an Internet phone. Further, the transmission terminal may be a smartphone, a mobile phone, a car navigation terminal, a wearable computer, a monitorirtg camera, an electronic whiteboard, a video game console, or industrial equipment with a communication function. Examples of the wearable computer include a wristwatch, a head mount display, and the like. Further, examples of the industrial equipment include office equipment such as a Multifunction Peripheral/Printer/Product (MFP), medical equipment such as an endoscope, agricultural equipment such as a cultivator, and the like.

Further, any one of a recording medium such as a CD-ROM in which the terminal program, the relay device program, or the transmission management program in the above embodiment is stored, the HD 204 that stores these programs, and the program providing system 90 including the HD 204 is used as a Program Product when the terminal program, the relay device program, and the transmission management program are provided to users and the like domestically or internationally.

Further, while the IP address of the relay device and the IP address of the terminal are managed in the above embodiment, information is not limited to this. As long as information contains relay device specific information for specifying the relay device 30 on the communication network 2 or terminal specific information for specifying the terminal 10 on the communication network 2, a Fully Qualified Domain Name (FQDN) of each of these pieces of information may be managed. In this case, an IP address of the FQDN is obtained through a Domain Name System (DNS) server in the art. In addition, the "relay device specific information for specifying the relay device 30 on the communication network 2" may also be represented as "relay device connection information indicating a connection to the relay device 30 on the communication network 2" or "relay device address information indicating an address of the relay device 30 on the communication network 2." In the same manner, the "terminal specific information for specifying the terminal 10 on the communication network 2" may also be represented as "terminal connection information indicating a connection to the terminal 10 on the communication network 2" or "terminal address information indicating an address of the terminal 10 on the communication network 2."

Further, in the above embodiment, a video conference system is described as an example of the transmission system 1. However, the transmission system is not limited to this but may be a phone system such as an Internet Protocol (IP) phone or an Internet phone. Further, the transmission system 1 may be a car navigation system. In this case, one terminal 10 corresponds to a car navigation device installed on an automobile and the other terminal 10 corresponds to a management terminal or a management server at a management center that manages car navigation or another car navigation device installed on another automobile, for example. Further, the transmission system 1 may be a communication system of mobile phones. In this case, the terminal 10 corresponds to a mobile phone, for example.

Further, in the above embodiment, image data and voice data are described as an example of content data. However, content data is not limited to this but may include touch data. In this case, a sense of touch by a user on one terminal is transmitted to the other terminal. Further, content data may include smell data. In this case, smell on one terminal is transmitted to the other terminal. Further, content data may include at least one of image data, voice data, touch data, and smell data.

Further, in the above embodiment, a video conference is held via the transmission system 1. However, the use of the transmission system 1 is not limited to this but the transmission system 1 may also be used for a meeting, a general conversation between family members, friends, or the like, or presentation of information in a unidirectional manner.

In the above embodiment, the transmission terminal is an example of an information processing apparatus and a video conference or a video phone is an example of service. Further, the conference setting unit is an example of a service setting requesting unit, the conference start requesting unit is an example of a service start requesting unit, and the final selection unit is an example of a selection unit. Further, the terminal permission unit is an example of a permission unit, the transmission and reception unit is an example of a transmission unit, the transmission management system is an example of a call control device, and the terminal program is an example of an information processing program.

While the present invention is described with reference to the specific examples and variations, each example or variation is only an exemplification. Those skilled in the art will understand various variations, modifications, alternatives, and replacements. While the devices according to the embodiment of the present invention are described with reference to functional block diagrams for convenience sake of description, such devices may be implemented with hardware, software, or a combination thereof. The present invention is not limited to the above embodiment, but various variations, modification, alternatives, and replacements are included without departing from the scope of the present invention.

According to an embodiment of the present invention, it is possible to facilitate replacement of a relay device or addition of the relay device in a communication system, the communication system including a call control device that performs a process of call control between information processing devices and the relay device that relays information between the information processing devices.

Further, the present invention is not limited to these embodiments, and various variations and modifications may be made without departing from the scope of the present invention.

## Claims

1. An information processing apparatus for connection to a call control device and a relay device via a communication network, the information processing apparatus **characterized by**:
a log-in requesting unit that sends a log-in request to the relay device;
a service setting requesting unit that sends a request for setting service of communication to the relay device if a report indicating that a login is allowed is received, the report being transmitted by the relay device in response to the log-in request; and
a service start requesting unit that sends a request for starting the service, via the call control device, between the information processing apparatus and an information processing device that serves as a communication partner, the request for starting the service including service identification information for identifying the service and log-in information for using the service, the service identification information and the log-in information being transmitted by the relay device in response to the request for setting service sent by the service setting requesting unit.

2. The information processing apparatus as claimed in claim 1, further **characterized by**:
a selection unit that selects a relay device to use from one or more relay devices, the one or more relay devices being selected by the call control device based on a communication method supported by the information processing apparatus, wherein the log-in requesting unit sends the log-in request to the relay device selected by the selection unit.

3. The information processing apparatus as claimed in claim 2, wherein
the log-in requesting unit sends a log-in request to the call control device, the log-in request including log-in information indicative of a communication method supported by the information processing apparatus, and
the selection unit selects the relay device to use from candidates for the relay device, the candidates for the relay device being transmitted by the call control device in response to the log-in request.

4. The information processing apparatus as claimed in claim 2, wherein if communication via the relay device is selected in the information processing apparatus, the selection unit selects the relay device to use from candidates for the relay device, the candidates for the relay device being transmitted by the call control device in response to the selection.

5. The information processing apparatus as claimed in claim 4, wherein a communication method of the communication via the relay device is based on H.2641AVC or H.264/SVC.

6. The information processing apparatus as claimed in claim 1, wherein if communication without the relay device is selected in the information processing apparatus, the service start requesting unit sends, to the call control device, a request for direct communication between the information processing apparatus and the information processing device that serves as the communication partner.

7. The information processing apparatus as claimed in claim 6, wherein a communication method of the communication without the relay device is based on WebRTC.

8. An information processing system **characterized by**:
an information processing apparatus;
a relay device; and
a call control device, all of which are connectable to one another via a communication network, wherein
the information processing apparatus includes
a log-in requesting unit that sends a log-in request to the relay device,
a service setting requesting unit that sends a request for setting service of communication to the relay device if a report indicating that a login is allowed is received, the report being transmitted by the relay device in response to the log-in request, and
a service start requesting unit that sends a request for starting the service, via the call control device, between the information processing apparatus and an information processing device that serves as a communication partner, the request for starting the service including service identification information for identifying the service and log-in information for using the service, the service identification information and the log-in information being transmitted by the relay device in response to the request for setting service sent by the service setting requesting unit, wherein
the relay device includes
a permission unit that determines whether to allow a login of the information processing apparatus in response to the log-in request sent by the information processing apparatus,
a participation permission processing unit that sets the service and creates the service identification information for identifying the service and the log-in information for using the service, if the information processing apparatus allowed to log in by the permission unit sends the request for setting the service, and
a transmission unit that transmits the service identification information and the log-in information created by the participation permission processing unit to the information processing apparatus, wherein
the call control device includes a transmission and reception unit that transmits the request for starting the service to the information processing device, the request for starting the service being sent by the information processing apparatus, and transfers a reply from the information processing device to the information processing apparatus.

9. An information processing method performed by an information processing apparatus connected to a call control device and a relay device via a communication network, the method **characterized by**:
sending a log-in request to the relay device;
sending a request for setting service of communication to the relay device if a report indicating that a login is allowed is received, the report being transmitted by the relay device in response to the log-in request; and
sending a request for starting the service, via the call control device, between the information processing apparatus and an information processing device that serves as a communication partner, the request for starting the service including service identification information for identifying the service and log-in information for using the service, the service identification information and the log-in information being transmitted by the relay device in response to the request for setting service.
